# EUROPÄISCHE PATENTSCHRIFT

(11) **EP 3 628 163 B1**
(45) Veröffentlichungstag und Bekanntmachung des Hinweises auf die Patenterteilung: **08.11.2023**
(21) Anmeldenummer: 19199954.9
(22) Anmeldetag: 26.09.2019
(51) Int. Cl.: F24C 15/32, A21B 3/04, F24C 15/00

(54) **ABLÖSCHKASTEN FÜR EIN GARGERÄT, GARGERÄT MIT EINEM ABLÖSCHKASTEN SOWIE VERFAHREN ZUM STEUERN DES DRUCKAUFBAUS BEI EINEM GARGERÄT**
STEAM CONDENSER FOR A COOKING APPLIANCE, COOKING APPLIANCE COMPRISING A STEAM CONDENSER AND METHOD FOR CONTROLLING THE PRESSURE BUILDUP IN A COOKING APPLIANCE
CONDENSATEUR À VAPEUR POUR UN APPAREIL DE CUISSON, APPAREIL DE CUISSON AVEC UN CONDENSATEUR À VAPEUR AINSI QUE PROCÉDÉ DE COMMANDE DE LA FORMATION DE PRESSION DANS UN APPAREIL DE CUISSON

(30) Priorität: 27.09.2018 DE 102018123939
(43) Veröffentlichungstag der Anmeldung: 01.04.2020
(73) Patentinhaber: Rational International AG, 9435 Heerbrugg (CH)
(72) Erfinder: Lingenheil, Markus, 9435 Heerbrugg (CH); Waßmus, Reinhard, 9435 Heerbrugg (CH); Roessner, Daniel, 9435 Heerbrugg (CH); Hamann, Regis, 9435 Heerbrugg (CH); Mougey, Mathieu, 9435 Heerbrugg (CH); Spahlholz, Kevin, 9435 Heerbrugg (CH); Grunenwald, Max, 9435 Heerbrugg (CH)
(74) Vertreter: Prinz & Partner mbB

(56) Entgegenhaltungen:
- DE-A1- 3 715 132
- DE-A1-102011 120 279
- DE-U1- 8 805 455
- DE-U1-202011 051 026
- US-A1- 2008 223 354

## Beschreibung

Die Erfindung betrifft einen Ablöschkasten zum Kondensieren vom Dampf für ein Gargerät gemäß dem Oberbegriff des Anspruchs 1. Die Erfindung betrifft weiterhin ein Gargerät mit einem Garraum und einem solchen Ablöschkasten. Die Erfindung betrifft schließlich ein Verfahren zum Steuern des Druckauf- und abbaus bei einem solchen Gargerät.

Ein Beispiel für ein solches Gargerät ist ein Tiegelgargerät, das unter dem Namen "VarioCookingCenter" bekannt ist. Im Tiegel des Gargeräts können Nahrungsmittel durch Kontaktwärme gegart werden, die von Heizelementen im Boden des Tiegels erzeugt wird. Die Heizelemente können auch eine Flüssigkeit im Tiegel erwärmen, die entweder selbst ein Nahrungsmittel darstellt (beispielsweise eine Suppe) oder in der das eigentliche Nahrungsmittel gegart wird.

Damit ein Druckgaren möglich ist, kann der Tiegel druckdicht mit einem Deckel verschlossen werden. Bevor der Deckel nach dem Druckgaren wieder geöffnet wird, muss der im Garraum enthaltene Dampf abgeführt werden, damit dieser nicht schlagartig unkontrolliert entweicht. Hierzu wird der Dampf innerhalb des Gargeräts zum Ablöschkasten geführt, in der der Dampf kondensieren soll. Das Kondensat kann dann zur Abwasserleitung geführt werden.

Der Ablöschkasten kann auch bei Gargeräten verwendet werden, bei denen der Garraum nicht in Form eines Tiegels ausgeführt ist, sondern ähnlich einem Backofen mit horizontalen Einschubebenen, wobei der Garraum mit einer schwenkbaren Tür verschlossen wird. Ein Beispiel für ein solches Gargerät ist ein Profi-Gargerät, das unter dem Namen "SelfCookingCenter" bekannt ist. Diese Gargeräte sind zwar nicht zum Druckgaren ausgelegt. Dennoch entstehen auch bei ihnen bei verschiedenen Garprozessen große Mengen an Dampf, die nicht unkontrolliert aus dem Gargerät austreten, sondern innerhalb des Gargeräts kondensieren sollen.

Unabhängig von ihrem Typ haben diese beiden Gargeräte gemeinsam, dass sie für den professionellen Einsatz vorgesehen sind, also in Restaurants, Kantinen und der Großgastronomie.

Aus dem Stand der Technik ist bekannt, dass zum Kondensieren größerer Dampfmengen in dem Ablöschkasten Wasser über die Wasserdüse zugeführt wird.

Beispielsweise zeigt die DE 20 2011 051 026 U1 ein Gargerät mit einem Garraum, einer Wasservorlage und einem durch eine Ablöschdüse gebildeten Ablöschkasten. Über die Ablöschdüse wird Wasser zwischen der Wasservorlage und einem Ablauf des Gargeräts eingespritzt.

Des Weiteren ist aus der DE 10 2011 120 279 A1 ein Verfahren zum Dämpfen von Nahrungsmitteln und ein Gargerät mit einem Ablöschkasten bekannt. Dabei ist der Ablöschkasten über ein Ventil mit dem Garraum verbunden und weist eine Wasserdüse auf.

Ferner offenbart die DE 88 05 455 U1 eine Kondensiervorrichtung mit mehreren Kammern, die durch Öffnungen derart miteinander verbunden sind, dass ein Strömungsweg von einem Dampfeinlass zu einer Austrittsöffnung entsteht. Zusätzlich sind in verschiedenen Kammern eine Wasserdüse, ein Lüfter und Prallplatten angeordnet. Der kondensierte Dampf kann dann über Ablaufstutzen abfließen.

Aus der US 2008/0 223 354 A1 ist außerdem ein Ablöschkasten bekannt, der mit einem Dampfgarer verbunden ist und eine Spritzkühlung aufweist. Dabei ist innerhalb des Ablöschkastens eine Ablenkplatte angeordnet, über die einströmendes Kondensat und Dampf in ein Wasserbad geleitet werden.

Schließlich zeigt die DE 37 15 132 A1 einen Ablöschkasten mit einem Kühlmittelbehälter, durch den ein Kanal geführt ist. Innerhalb des Kanals sind Leitbleche angeordnet, die einen in den Kanal einströmenden Dampf umlenken. Am stromabwärtigen Ende des Kanals wird das entstehende Kondenswasser zu einem Ablauf geführt.

Die Aufgabe der Erfindung besteht darin, die bekannten Ablöschkasten dahingehend zu verbessern, dass große Mengen an Dampf optimal niedergeschlagen werden können, also zum Kondensieren gebracht werden können.

Zur Lösung dieser Aufgabe ist erfindungsgemäß ein Ablöschkasten für ein Gargerät gemäß Anspruch 1 vorgesehen. Der erfindungsgemäße Ablöschkasten beruht auf der Erkenntnis, dass durch die Labyrinthstruktur mit der mindestens einen Umlenkfläche mehr Flächen innerhalb des Ablöschkastens vorhanden sind, mit denen der Dampf in Berührung kommen und an denen der Dampf kondensieren kann. Auch wird der Dampf durch die Labyrinthstruktur zu einem längeren Weg und damit zu einer längeren Verweildauer in dem Ablöschkasten gezwungen, bevor er den Auslass erreicht. Somit können bei gleichem Volumen des Ablöschkastens größere Dampfmengen niedergeschlagen werden. Zusätzlich wird durch einen Verwirbelungsschutz verhindert, dass Spritzwasser, das beim Ablöschen des Dampfes in dem Ablöschkasten verwirbelt, mit der Wasserdüse in Kontakt gelangt

Allgemein ausgedrückt bildet der einströmende Dampf mit dem eingesprühten Wasser beim Aufprall auf die Umlenkwände eine zyklonartige Verwirbelung in einem kammerartigen Kondensationsbereich. Bei größeren Dampfmengen bzw. größerem Dampfvolumenstrom sind zwei oder mehr Düsen und/oder kammerartige Kondensationsbereiche vorteilhaft. Der Dampf wird mehrmals durch ein sehr kompaktes Labyrinth umgelenkt. Die entstehenden Zyklonen sorgen für eine optimale Kondensation bei geringstmöglichen Wassereinsatz und kompakter Bauweise.

Der Begriff "Labyrinthstruktur" bezeichnet dabei eine Struktur, die einen Weg für den Dampf bzw. das Kondensat vorgibt, der mindestens zweimal merklich seine Richtung ändert.

Vorzugsweise sind mindestens zwei Umlenkwände vorgesehen, die die Strömungsrichtung um jeweils mindestens 90 Grad umlenken. Dies erhöht die Anzahl der Flächen, an denen der Dampf kondensieren kann, und die Länge des Weges innerhalb des Ablöschkastens, was das Kondensieren ebenfalls unterstützt. Eine erste Änderung der Strömungsrichtung kann bereits dadurch erfolgen, dass eine erste Umlenkwand so im Strömungsweg des in den Ablöschkasten einströmenden Dampfs liegt, dass er seine Strömungsrichtung in dem Ablöschkasten ändern muss.

Gemäß einer Ausführungsform der Erfindung besteht der Ablöschkasten aus einem Körperteil und einem Deckelteil. Dies erleichtert die Montage. Das Körperteil wie auch das Deckelteil selbst können mehrteilig ausgeführt sein.

Vorzugsweise ist dabei das Deckelteil mit dem Körperteil verclipst, sodass keinerlei Schrauben oder ähnliche Befestigungsmittel verwendet werden müssen.

Das Deckelteil ist so am Körperteil montiert, dass der Ablöschkasten dicht ist. Dies kann durch Kleben, Verclipsen, Verschweißen (z.B. mittels Ultraschall) etc. erreicht werden.

Vorzugsweise ist der Ablöschkasten ein Kunststoffspritzgussteil, insbesondere aus PPS. Hieraus ergeben sich geringe Herstellungskosten, insbesondere wenn der Ablöschkasten aus einem Körperteil und einem Deckelteil gebildet sind, die in einer Spritzgussform ohne größere Probleme hergestellt werden können, und die gewünschte Temperaturbeständigkeit.

Abhängig von der konkreten Ausgestaltung des Ablöschkastens können zwei, drei oder auch vier Wasserdüsen vorgesehen sein. Diese ermöglichen es, Wasser an unterschiedlichen Orten und auch mit unterschiedlichen Sequenzen einzuspritzen, sodass der Dampf optimal niedergeschlagen werden kann.

Gemäß einer Ausführungsform ist der Ablöschkasten bezogen auf die Einbauposition in vertikaler Richtung langgestreckt ausgeführt, wobei sich die mindestens eine Wasserdüse am oberen Ende befindet, darunter der Dampfeinlass angeordnet ist, darunter die mindestens eine Umlenkfläche und darunter der Wasserauslass. Hierdurch ergibt sich trotz einer sehr schmalen Bauform eine sehr gute Kondensationsleistung.

Der Dampfeinlass kann hier auf zwei oder mehr getrennte Dampfeinlässe aufgeteilt sein, die übereinander angeordnet sind. Dabei steht jeder der Dampfeinlässe mit einem von zwei Tiegeln des Gargeräts in Verbindung.

Grundsätzlich können die Dampfeinlässe des Ablöschkastens mit einer oder mehreren externen Dampfquellen in Verbindung stehen, um den von diesen stammenden Dampf niederzuschlagen.

Gemäß einer anderen bevorzugten Ausführungsform ist eine Wasserdüse in einer Hauptkondensationskammer angeordnet, in der auch der Dampfeinlass angeordnet ist, wobei die Umlenkfläche die Hauptkondensationskammer von einer Nachkondensationskammer trennt, in der eine zweite Wasserdüse angeordnet ist. Durch die Aufteilung in eine Hauptkondensationskammer und eine Nachkondensationskammer ergibt sich eine sehr hohe Kondensationsleistung.

Vorzugsweise ist der Dampfeinlass auf die Umlenkfläche orientiert, sodass gewährleistet ist, dass der eintretende Dampf in innigem Kontakt mit der Umlenkfläche gelangt.

Vorzugsweise ist eine Leitwand vorgesehen, die das Kondensat zum Wasserauslass führt und eine Überlaufkante übergreift. Die Überlaufkante definiert einen Notüberlauf, durch den Kondensat abgeführt werden kann, wenn der Wasserauslass blockiert sein sollte. Die Leitwand gewährleistet, dass das Kondensat erst einmal zum Wasserauslass geführt wird.

Gemäß einer Ausgestaltung ist ein Abwasseranschluss vorgesehen, durch den in den Ablöschkasten Abwasser eingeleitet werden kann, das durch den Wasserauslass wieder abgeführt wird. Bei dieser Variante ist auch der Abwasseranschluss des Tiegels oder der Tiegel an den Ablöschkasten angeschlossen, sodass das Abwasser zusammen mit dem Kondensat weitergeleitet wird. Hierdurch ergibt sich eine sehr kompakte Leitungsführung.

Der Verwirbelungsschutz kann in einer technisch einfachen Ausführungsform durch einen Rohrstutzen gebildet sein, der in den Ablöschkasten hineinragt. Der Rohrstutzen hat einen Durchmesser, der ein ungehindertes Einspritzen des Wassers zum Niederschlagen des Dampfes in dem Ablöschkasten ermöglicht, und gleichzeitig eine Länge, die es eventuell entstehendem Spritzwasser nicht ermöglicht, direkt mit der Wasserdüse in Kontakt zu kommen.

Als geeignet hat sich eine Geometrie herausgestellt, bei der ein rotationssymmetrischer Rohrabschnitt verwendet wird, der die Düse in einem Abstand von min. 2-mal dem Düsendurchmesser umgibt.

Die oben genannte Aufgabe wird auch gelöst durch ein Gargerät mit Garraum und einem Ablöschkasten der vorstehend erläuterten Art, wobei ein Ventil zwischen dem Garraum und dem Ablöschkasten vorgesehen ist, mit dem der Dampfaustritt aus dem Garraum hin zum Ablöschkasten gesteuert wird. Hinsichtlich der sich ergebenden Vorteile wird auf die obigen Erläuterungen verwiesen.

Das Ventil ist vorzugsweise ein Kugelventil. Dieses hat den Vorteil, dass einerseits sehr große Öffnungsquerschnitte möglich sind, mit denen im Bedarfsfall große Dampfmengen sehr schnell aus dem Garraum austreten können. Andererseits kann der Öffnungsquerschnitt bei einem Kugelventil sehr präzise gesteuert werden, da aufgrund des zur Verfügung stehenden Drehbereichs des Ventilelements um 90° ein sehr großer Betätigungsweg zur Verfügung steht. Außerdem verringert der sehr große maximale Öffnungsquerschnitt eines Kugelventils erheblich das Risiko, dass es verstopft wird.

Um zu gewährleisten, dass der Ablöschkasten auch bei geschlossenem Dampfeinlass und verschlossenem Wasserablauf frei über den Notüberlauf leerlaufen kann, ist gemäß einer Ausgestaltung eine Druckausgleichsöffnung zwischen dem Garraum und dem Wasserauslass vorgesehen ist. Durch die Druckausgleichsöffnung kann Luft in den Ablöschkasten nachströmen, so dass sich dort kein Unterdruck aufbauen kann, der es verhindern könnten, dass der Ablöschkasten frei leerlaufen kann.

Gemäß einer Ausgestaltung ist die Druckausgleichsöffnung unmittelbar in einer Wand des Ablöschkastens vorgesehen, so dass im Bedarfsfall die Luft unmittelbar in den Ablöschkasten nachgesaugt wird. Außerhalb des Ablöschkastens kann an die Druckausgleichsöffnung ein Schlauch angeschlossen sein, der bis an eine Unterseite des Gargeräts geführt ist, so dass eventuelles Kondensat oder in den Schlauch eintretender Dampf an einer geeigneten Stelle des Gargeräts abgeführt werden können.

Gemäß einer alternativen Ausgestaltung kann die Druckausgleichsöffnung in einer Dampfleitung vom Garraum zum Ablöschkasten vorgesehen sein, so dass beim Auftreten eines Unterdrucks in dem Ablöschkasten Luft bereits dort nachgesaugt wird. Die Druckausgleichsöffnung kann beispielsweise durch ein T-Stück in der Dampfleitung gebildet sein, an das ein zur Umgebung offener Schlauch angeschlossen ist.

Anstelle des Schlauchs, der an die Druckausgleichsöffnung angeschlossen ist, könnte der Druckausgleichsöffnung auch eine Rückschlagklappe oder ein Rückschlagventil zugeordnet sein, das einerseits das Nachströmen von Luft ermöglicht und andererseits verhindert, dass Dampf aus dem Ablöschkasten oder der Dampfleitung austritt.

Der erfindungsgemäße Ablöschkasten kann außerdem bei einem Verfahren zum Steuern des Druckaufbaus bei einem Gargerät verwendet werden, in dem beim Aufheizen das Ventil in eine teilweise geöffnete Stellung gebracht wird und, wenn eine sich im Garraum befindende Flüssigkeit eine Temperatur nahe der Siedetemperatur erreicht hat, Wasser mittels der Wasserdüse in den Ablöschkasten eingespritzt wird. Erst wenn ein vordefiniertes Ereignis erreicht ist, wird das Ventil geschlossen. Dieses Verfahren beruht auf der überraschenden Erkenntnis, dass der Siedevorgang und der Druckaufbau dadurch unterstützt werden kann, dass das Ventil während bestimmter Phasen des Druckaufbaus geöffnet ist.

Beim Druckaufbau ist es das Ziel, im Garraum den Zustand der Dampfsättigung zu erreichen, um einen nach der Wasserdampfkurve stabilen Gleichgewichtsdampfdruck mit zugehöriger höherer Siedetemperatur zu bekommen (thermodynamisches Gleichgewicht von Druck und Temperatur). In diesem Zustand bestehen beide Phasen (gasförmiger Dampf und siedendes Wasser) stabil nebeneinander; keine Phase wächst auf Kosten der Anderen, denn die Verdampfung der Flüssigkeit ist mengenmäßig gleich der Kondensation des Gases im geschlossenen Garraum. Um diesen Zustand zu erreichen, muss mit dem Aufheizen der Wasservorlage im Garraum der Luftsauerstoff aus dem Garraum über das geöffnete Ventil ausgetrieben werden. Bei diesem Vorgang kann der Ablöschkasten unterstützen.

Während des Aufheizens ist das Ventil teilweise oder vollständig geöffnet, und in den Ablöschkasten wird Wasser eingesprüht, welches den aus dem Garraum austretenden Dampf sofort niederschlägt. Da die spezifische Dichte von Dampf etwa um den Faktor 1.650 kleiner ist als die spezifische Dichte von Wasser, kommt es beim Kondensieren von Dampf zu einer erheblichen Verringerung des Volumens. Diese Volumenreduktion führt zu einem Unterdruck in dem Ablöschkasten, der das Ausströmen des für den Druckgarprozess im Garraum unerwünschten Luftsauerstoffs aus dem Garraum unterstütz. Hierdurch wird das angestrebte thermodynamisch Gleichgewicht deutlich schneller erreicht.

Das Einspritzen von Wasser startet vorzugsweise dann, wenn die Siedetemperatur erreicht ist (oder kurz vorher zu einem Zeitpunkt, zu dem bereits Wasserdampf erzeugt wird).

Das Ventil wird dann geschlossen, wenn das gewünschte thermodynamische Gleichgewicht erreicht ist. Dies führt dann zu einem Druckanstieg im System, der dann das Ereignis darstellt, das zum Schließen des Ventils führt. Es ist allerdings auch möglich, dass das Ventil zeitgesteuert und/oder gesteuert von einem Temperaturgradienten geschlossen wird.

Vorzugsweise ist das Ventil zu Beginn des Druckgarprozesses teilweise geschlossen. Wäre das Ventil vollständig geöffnet, dann wäre der Öffnungsquerschnitt so groß, dass kein sinnvolles, aussagekräftiges Drucksignal, das das Erreichen des thermodynamischen Gleichgewichtszustandes anzeigt, erhalten werden kann. Wird dagegen das Ventil beispielsweise halb geschlossen, kann einerseits in der gewünschten Weise Dampf austreten, der in dem Ablöschkasten niedergeschlagen werden kann, während man gleichzeitig ein schnelles, aussagekräftiges Drucksignal (ca. 40 mbar) erhält, das anzeigt, dass der thermodynamische Gleichgewichtszustand demnächst erreicht ist. Daraufhin wird das Ventil vollständig geschlossen, und es wird kein Wasser mehr in den Ablöschkasten eingespritzt. Der Garraum arbeitet dann mit einem Überdruck und der daraus resultierenden Temperatur, insbesondere im angestrebten Gleichgewichtszustand mit einem Überdruck von 300 mbar bei einer Temperatur von 108 Grad Celsius.

Die Erfindung wird nachfolgend anhand verschiedener Ausführungsformen beschrieben, die in den beigefügten Zeichnungen dargestellt sind. In diesen zeigen:
- Figur 1 schematisch ein Gargerät gemäß einer ersten Ausführungsform;
- Figur 2 den Ablöschkasten des Gargeräts von Figur 1 in einem geöffneten Zustand und in einer Seitenansicht;
- Figur 3 schematisch ein Gargerät gemäß einer zweiten Ausführungsform;
- Figur 4 den Ablöschkasten des Gargeräts von Figur 3 in einem geöffneten Zustand, einer Seitenansicht und einer schematischen Ansicht.

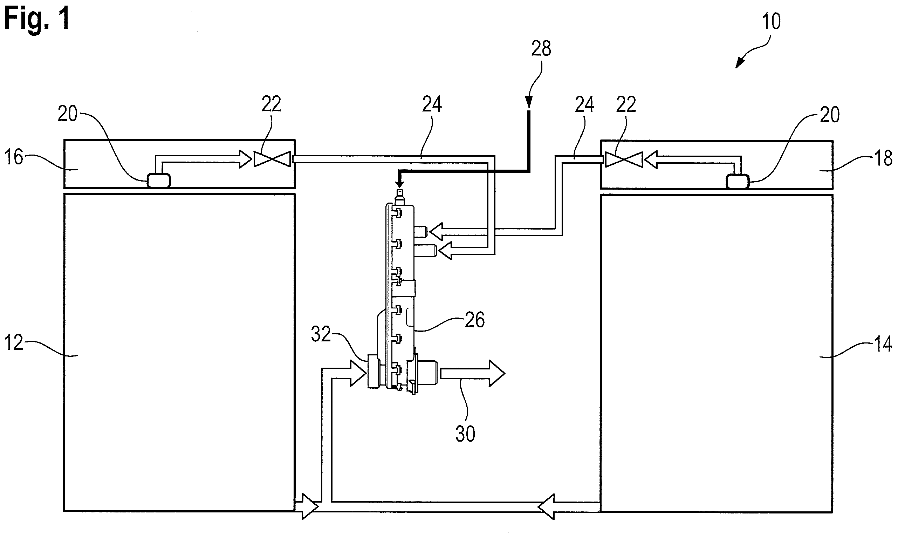

In Figur 1 ist schematisch ein Gargerät 10 gezeigt, das ein Tiegelgargerät mit zwei Tiegeln 12, 14 ist. In jedem der Tiegel 12, 14 ist ein Garraum gebildet, der mit einem schematisch gezeigten Deckel 16, 18 verschlossen werden kann.

Weitere Bestandteile des Gargeräts 10 wie eine Heizvorrichtung für die Tiegel, eine Wasserzufuhr in die Tiegel, eine eventuell vorhandene Kippvorrichtung, etc. werden nachfolgend nicht erläutert und sind auch in der Figur nicht gezeigt, da sie zum Verständnis der Erfindung nicht wichtig sind.

Um Dampf aus dem jeweiligen Garraum abzuführen, ist jeder Deckel 16, 18 mit einer Dampfauslassöffnung 20 versehen. Der Dampfauslassöffnung 20 ist jeweils ein Ventil 22 nachgeordnet. Mit dem Ventil 22 kann gesteuert werden, ob und gegebenenfalls wie viel Dampf aus dem jeweiligen Garraum austreten kann.

Das Ventil 22 kann insbesondere ein Kugelventil sein, also ein Ventil, bei dem ähnlich wie bei einem Kugelhahn ein Ventilelement um 90 Grad gedreht werden kann. Der Vorteil eines Kugelventils besteht darin, dass ein vergleichsweise großer Öffnungsquerschnitt freigegeben werden kann. Dies verhindert Verstopfungen. Weiterhin kann der Öffnungsquerschnitt eines Kugelventils sehr präzise zwischen 0 und 100 Prozent gesteuert werden.

Dem Ventil 22 ist ein hier nicht gezeigter Antrieb zugeordnet, mit dem in Verbindung mit einer Steuerung das Öffnen und Schließen des Ventils 22 gesteuert wird. Das Ventil 22 oder der Antrieb ist mit einem Positionssensor versehen, sodass jederzeit die Position des Ventilelements und damit der Öffnungsquerschnitt bekannt sind.

An die Ventile 22 schließen sich Dampfleitungen 24 an, die zu einem Ablöschkasten 26 (teilweise auch als "Ablöschkasten" bezeichnet) führen. Der Ablöschkasten 26 dient dazu, den aus den Garräumen austretenden Dampf zu kondensieren. Um dies zu unterstützen, ist ein Wasseranschluss 28 vorgesehen, mit dem Wasser in den Ablöschkasten 26 eingebracht werden kann.

Der Ablöschkasten 26 weist einen Wasserauslass 30 auf, durch den der kondensierte Dampf abgeführt werden kann.

Weiterhin weist der Ablöschkasten 26 einen Abwasseranschluss 32 auf, an den der Ablauf der Tiegel 12, 14 angeschlossen ist. Flüssigkeiten, die aus den Tiegeln 12, 14 Richtung Abwasserleitung abgeführt werden sollen, strömen also durch den Ablöschkasten 26.

Ein besonderes Merkmal des Abwasseranschlusses 32 ist, dass er als integrierter, von dem Ablöschkasten hervorstehender Abwasseranschlussstutzen ausgeführt ist. Dieser integrierte Abwasseranschluss steht strahlwasserdicht (IPX9) aus dem Gerätekorpus über und ist mit einem standardisierten, handelsüblichen Querschnitt DN40 bzw. DN50 ausgeführt, so dass daran direkt die Hausabwasserinstallationsleitung angeschlossen werden kann.

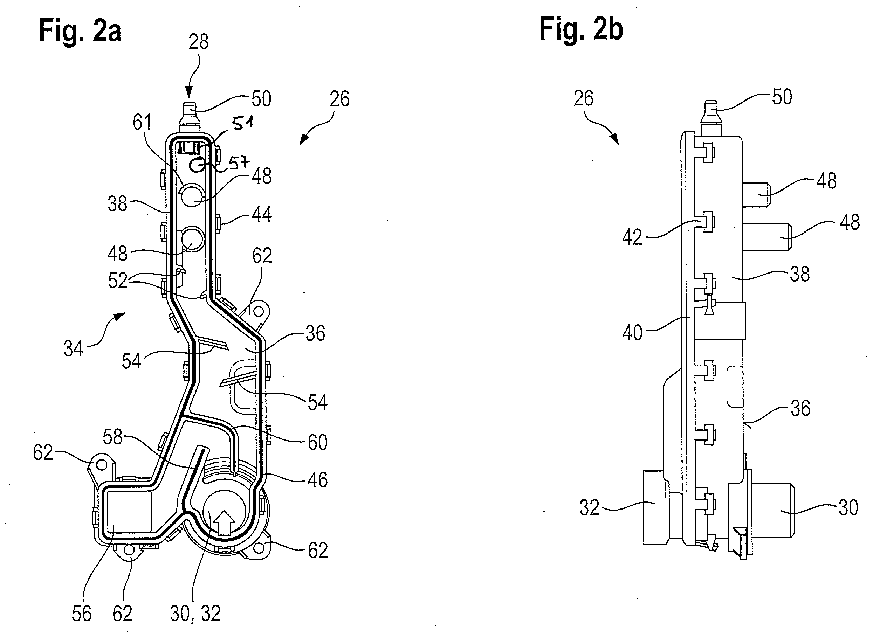

Der Ablöschkasten 26 ist in den Figuren 2a und 2b im Detail gezeigt.

Der Ablöschkasten 26 besteht aus einem Körperteil 34 mit einer Rückwand 36 und einer umlaufenden Seitenwand 38. Auf dem Körperteil 34 ist ein Deckelteil 40 angebracht, sodass zwischen der Rückwand 36, der umlaufenden Seitenwand 38 und dem Deckelteil 40 ein Volumen abgegrenzt ist.

Als Material für das Körperteil 34 und das Deckelteil 40 ist PPS besonders geeignet.

Das Deckelteil 40 und das Körperteil 34 sind miteinander verclipst. Zu diesem Zweck sind am Deckelteil 40 geeignete Rastlaschen 42 vorgesehen, die mit Gegenstücken 44 am Körperteil 34 zusammenwirken.

Die umlaufende Seitenwand 38 kann auf ihrer von der Rückwand 36 abgewandten freien Kante eine Dichtkontur 46 aufweisen, die mit dem Deckelteil geeignet zusammenwirkt, um zwischen dem Deckelteil 40 und dem Körperteil 34 abzudichten.

Der Ablöschkasten 26 weist zwei Dampfeinlässe 48 auf, die mit den Dampfleitungen 24 des Gargeräts in Verbindung stehen. Die beiden Dampfeinlässe 48 sind vertikal übereinander in einem vergleichsweisen schmalen Abschnitt des Ablöschkastens 26 angeordnet.

Der in Figur 1 bereits angesprochene Wasseranschluss 28, mit dem Wasser in den Ablöschkasten 26 eingebracht werden kann, ist eine Wasserdüse 50, mit der Wasser in den Ablöschkasten eingespritzt werden kann. Die Wasserdüse 50 ist hier oberhalb der beiden Dampfeinlässe 48 angeordnet.

Um den Dampf innerhalb des Ablöschkastens optimal niederzuschlagen, also kondensieren zu lassen, ist innerhalb des Ablöschkastens eine Labyrinthstruktur vorgesehen, mit der der Strömungsweg von den Dampfeinlässen 48 zum Wasserauslass 30 mehrfach umgelenkt wird. Diese Labyrinthstruktur ist hier gebildet durch zwei kleinere Umlenkwände 52, die versetzt zueinander von entgegengesetzten Seiten in den Ablöschkasten 26 hineinragen, und zwei größeren Umlenkwänden 54, die ebenfalls versetzt zueinander von entgegengesetzten Seiten in den Ablöschkasten 26 hineinragen. Jede der Umlenkwände 52, 54 stellt eine Umlenkfläche für den Dampf dar, der über die Dampfeinlässe 48 in den Ablöschkasten 26 eingebracht wird und in mehr oder weniger kondensierter Form Richtung Wasserauslass 30 strömt.

Grundsätzlich kann die Labyrinthstruktur auch durch andere Wände oder Umlenkgestaltungen hergestellt werden.

Der Wasserauslass 30 ist annähernd vertikal unterhalb der Dampfeinlässe 48 angeordnet. Seitlich daneben ist ein Notüberlauf 56 angeordnet, durch den Wasser aus dem Ablöschkasten 26 ausströmen kann, falls der Wasserauslass 30 verstopft oder blockiert ist. Zwischen dem Notüberlauf 56 und dem Wasserauslass 30 ist eine Überlaufkante 58 angeordnet. Um zu gewährleisten, dass das Kondensat zum Wasserauslass 30 geleitet wird, ist eine Leitwand 60 vorgesehen, die die Überlaufkante 58 übergreift.

Dabei sind alle Durchführungen vom Garraum bis zum Austritt in den Wasserauslass 30 so ausgeführt, dass sich der zur Verfügung stehende Querschnitt nicht verringert. Dies vermeidet ein Verstopfen.

Damit der Ablöschkasten 26 auch dann zuverlässig über den Notüberlauf leerläuft, wenn sowohl der Wasserauslass 30 verschlossen ist als auch die Dampfauslässe 48 verschlossen sind (so dass sich ein Unterdruck in dem Ablöschkasten 26 einstellen könnte), ist eine Druckausgleichsöffnung 57 vorgesehen, die zur Atmosphäre offen ist. Durch diese kann im Bedarfsfall Luft von außen nachströmen, so dass sich in dem Ablöschkasten 26 kein Unterdruck einstellen kann.

Die Druckausgleichsöffnung 57 ist hier unmittelbar in der Rückwand 36 des Körperteils des Ablöschkastens 26 vorgesehen. Alternativ kann sie auch in der Dampfleitung vom Gargerät zum Ablöschkasten 26 vorgesehen sein.

An die Druckausgleichsöffnung 57 ist vorzugsweise ein Schlauch angeschlossen, der sich bis hin zu einer geeigneten Stelle am Gargerät erstreckt. Dort kann Kondensat oder auch Dampf, der durch die Druckausgleichsöffnung 57 aus- und in den Schlauch eintritt, an die Umgebung abgegeben werden.

Alternativ zu einem Schlauch könnte auch eine Rückschlagklappe oder ein Rückschlagventil verwendet werden, durch das Luft nachgesaugt werden kann, wenn dies nötig ist, aber kein Dampf nach außen austreten kann.

Einstückig mit dem Körperteil 34 sind auch verschiedene Befestigungslaschen 62 ausgebildet, die zur Montage des Ablöschkastens 26 im Gargerät dienen.

Wenn Dampf aus den Tiegeln 12, 14 abgeführt werden soll, wird das entsprechende Ventil 22 geeignet geöffnet, sodass der Dampf durch den Dampfeinlass 48 in den Ablöschkasten 26 einströmt. Gleichzeitig wird über die Wasserdüse 50 Wasser eingespritzt, das den Dampf niederschlägt. Die Umlenkwände 52, 54 gewährleisten dabei, dass es zu einer guten Vermischung zwischen Wasser und Dampf kommt und dass der Kondensationsbereich geometrisch und strömungstechnisch so gestaltet ist, dass dem ausströmenden Dampf eine möglichst große Wasser- und Wandfläche gegenübersteht, sodass die Kontaktzeit des Dampfes mit Wasser und Wand im Inneren des Ablöschkastens 26 möglichst lang ist. Dies gewährleistet, dass der Druck in den Tiegeln 12, 14 möglichst schnell abgebaut werden kann und mit einer möglichst geringen Menge an Wasser das gesamte Dampfvolumen kondensiert werden kann, sodass kein Dampf oder Kondensat aus dem Notüberlauf des Geräts austritt.

Um zu verhindern, dass beim Einsprühen des Wassers der Spray der Wasserdüse 50 in die Dampfleitungen 24 aufsteigt, ist um den oberen der beiden Dampfeinlässe 48 herum ein Abweiser 61 vorgesehen.

Weiterhin ist der Wasserdüse 50 ein Verwirbelungsschutz 51 zugeordnet, der verhindert, dass Spritzwasser, das beim Ablöschen des Dampfes in dem Ablöschkasten 26 verwirbelt, mit der Wasserdüse 50 in Kontakt gelangt. Der Verwirbelungsschutz 51 ist hier als Rohrstutzen ausgebildet, der in den Ablöschkasten 26 hineinragt.

Der Verwirbelungsschutz 51 schirmt die Wasserdüse 50 gegen schräg in dem Ablöschkasten 26 herumwirbelndes Spritzwasser ab; gerade in vertikaler Richtung nach oben sich bewegendes Spritzwasser wird von der Wasserdüse 50 durch den Sprühnebel ferngehalten, den die Wasserdüse abgibt.

Als geeignet hat sich eine Geometrie für den Verwirbelungsschutz 50 herausgestellt, bei der ein rotationssymmetrischer Rohrabschnitt verwendet wird, der die Wasserdüse 50 in einem Abstand von min. 2-mal dem Düsendurchmesser umgibt.

Das Öffnungsprofil, mit dem das Ventil 22 zum Ablassen von Dampf geöffnet wird, kann in Abhängigkeit von vielen Größen dynamisch angepasst werden. Diese Größen können sein:
- Druck im Garraum
- Temperatur im Garraum
- Temperatur im Kanal der Dampfabfuhr
- Temperatur im Abwasser
- Gerätegröße bzw. Garraumgröße
- Füllstand des Gargeräts
- Lebensmittel im Gargerät, insbesondere Neigung zum Schäumen bei Druckabbau
- Betriebsmodus, zum Beispiel dämpfen ohne Überdruck
- Sicherheitskriterien des Gargeräts

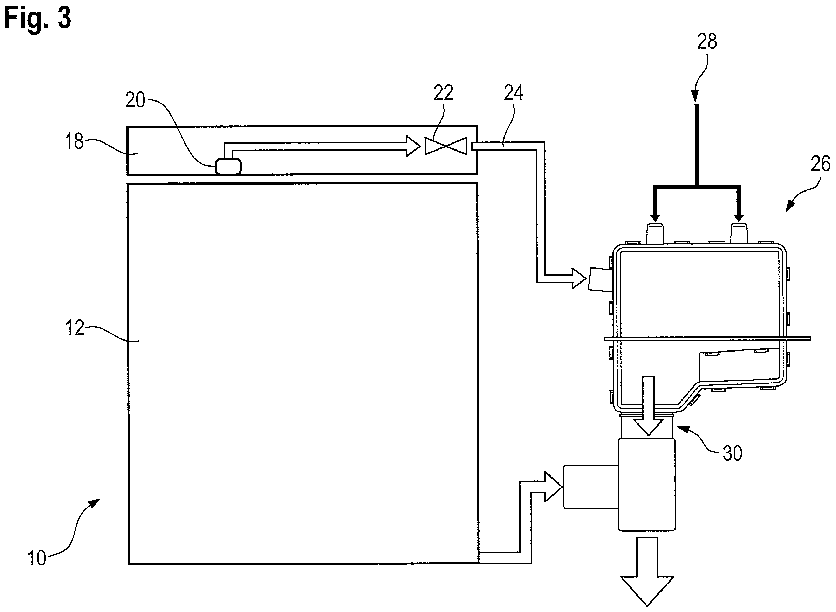

In Figur 3 ist eine zweite Ausführungsform eines Gargeräts gezeigt. Für die von der ersten Ausführungsform bekannten Bauteile werden die selben Bezugszeichen verwendet, und es wird insoweit auf die obigen Erläuterungen verwiesen.

Der Ablöschkasten 26 dieser Ausführungsform ist so ausgelegt, dass das entstehende Dampfvolumen bei 50 I Gargut bei 300mbar unter 180s abgelöscht werden kann.

Ein Unterschied zwischen der ersten und der zweiten Ausführungsform besteht darin, dass bei der zweiten Ausführungsform ein einziger Tiegel 12 verwendet wird. Dieser kann ein Fassungsvermögen von bis zu 150 Liter Flüssigkeit haben. Die Tiegel des in Figur 1 gezeigten Gargeräts können ein Fassungsvermögen von beispielsweise in der Größenordnung von jeweils 50 Litern haben.

Der Ablöschkasten 26 dieser Ausführungsform ist so ausgelegt, dass das entstehende Dampfvolumen bei 120 I Gargut bei 300mbar unter 180s abgelöscht werden kann.

Ein zweiter Unterschied zwischen der ersten und der zweiten Ausführungsform besteht darin, dass bei der zweiten Ausführungsform der Ablauf des Tiegels 12 nicht durch den Ablöschkasten 26 verläuft, sondern kurz hinter dem Ablöschkasten 26 an die Abwasserleitung angeschlossen ist.

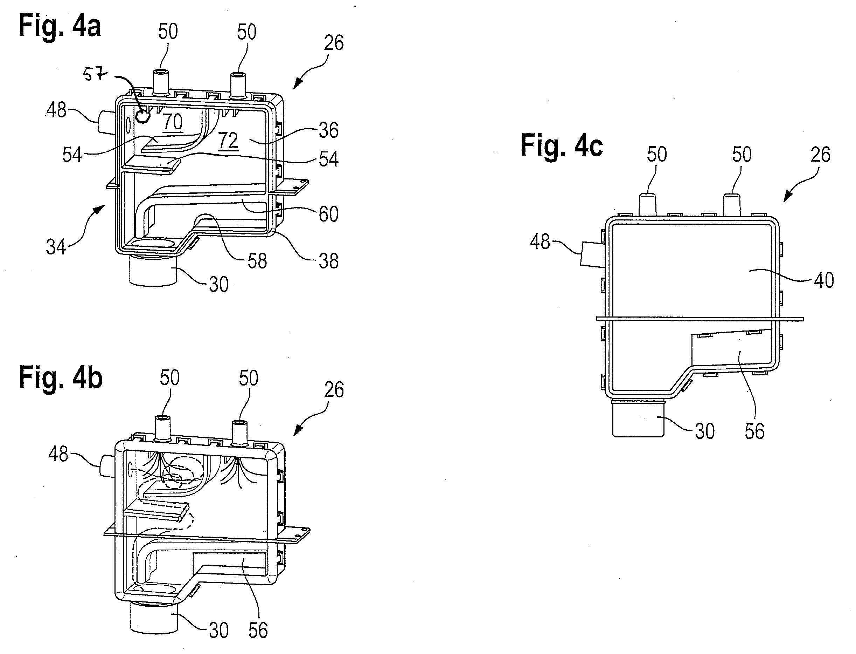

Ein dritter Unterschied besteht hinsichtlich der Ausgestaltung des Ablöschkastens 26. Dieser wird nachfolgend anhand der Figuren 4a bis 4c näher erläutert.

Der Aufbau des Ablöschkastens 26 mit einem Körperteil 34 und einem Deckelteil 40 entspricht dem Aufbau des Ablöschkastens 26, der beim Gargerät von Figur 1 verwendet wird. Der Hauptunterschied besteht darin, dass der Dampfeinlass 48 zu einer Hauptkondensationskammer 70 führt, die mittels einer gekrümmten Umlenkwand 54 und eine kurzen geraden Umlenkwand 54 von einer Nachkondensationskammer 72 getrennt ist.

Die Nachkondensationskammer 72 ist durch eine weitere Umlenkwand 54 von der Leitwand 60 getrennt, die dann zum Wasserauslass 30 führt.

Sowohl die Hauptkondensationskammer 70 als auch die Nachkondensationskammer 72 sind jeweils mit einer eigenen Wasserdüse 50 versehen.

In einer nicht gezeigten Ausführungsvariante können auch mehr als die gezeigten zwei Wasserdüsen angeordnet werden.

Jeder Wasserdüse kann ein Verwirbelungsschutz zugeordnet sein.

Der Dampfeinlass 48 ist so orientiert, dass der Dampf, wenn er in die Hauptkondensationskammer 70 eintritt, auf die gekrümmte Umlenkfläche gerichtet ist, die von der Umlenkwand 54 gebildet ist. Es erfolgt dadurch eine wirbelartige Vermischung mit dem Wasser, das durch die linke Wasserdüse 50 in die Hauptkondensationskammer 70 eingesprüht wird. Diese wirbelartige Vermischung ist in Figur 4b mit dem gestrichelt dargestellten Strömungsweg des Dampfes beziehungsweise Kondensats gezeigt.

Durch den engen Überströmquerschnitt zwischen den beiden Wänden 54 wird der Dampf gut in der Hauptkondensationskammer 70 zurückgehalten.

Soweit in der Hauptkondensationskammer 70 nicht sämtlicher Dampf niedergeschlagen wurde, strömt das Gemisch aus Dampf, Wasser und Kondensat in die Nachkondensationskammer 72, wo wiederum Wasser eingesprüht wird. Durch die langgestreckte Umlenkwand 54 steht auch hier eine sehr große Kontaktfläche zur Verfügung, was das Kondensieren unterstützt.

Aus der Nachkondensationskammer 72 wird das Kondensat mittels der Leitwand 60 hin zum Wasserauslass 30 geleitet. Auch bei dieser Ausführungsform dient die Leitwand 60 sdazu, das Kondensat über eine Überlaufkante zuführen, die den Wasserauslass 30 vom Notüberlauf des Ablöschkastens 26 trennt. Die Überlaufkante 58 ist hier als hochgezogene Bodenwand gebildet, und der Notüberlauf ist als seitliche Auslassöffnung im Deckelteil 40 ausgebildet.

Wenn das Ventil 22 geöffnet und Dampf in den Ablöschkasten 26 eingebracht wird, wird ein erster Teil des Dampfs in der Hauptkondensationskammer 70 niedergeschlagen. Der entstehende Unterdruck zieht sehr schnell weiteren Dampf aus dem Garraum nach. Das bereits entstandene Kondensat fließt über die Umlenkwände 54 und die Leitwand 60 zum Wasserauslass 30.

Der noch nicht niedergeschlagene Dampf strömt weiter in die Nachkondensationskammer 72 beziehungsweise wird vom nachströmenden Dampf in die Nachkondensationskammer 72 gedrückt. Hier wird erneut Wasser über die zweite Wasserdüse 50 eingesprüht.

Zum Ansteuern des Ventils 22 sind mehrere Strategien geeignet.

Eine Strategie besteht darin, über einen geeigneten Sensor jederzeit die Winkelstellung des Ventilelements zu kennen. Es können dann präzise vordefinierte Positionen angefahren werden.

Alternativ kann vorgesehen sein, dass mehrere vordefinierte, diskrete Positionen bekannt sind und angefahren werden können.

Wenn das Ventil als Kugelventil ausgeführt ist, besteht ein Vorteil darin, dass unterschiedliche Öffnungsgeschwindigkeiten möglich sind.

Für den Druckaufbau kann die Geschwindigkeit so geregelt werden, dass zu Beginn eine langsame Geschwindigkeit gefahren wird, bis ein thermodynamisches Gleichgewicht erreicht und eine stabile Druckmessung möglich ist. Danach wird das Kugelventil 22 zügig geschlossen.

Für den Druckabbau kann die Geschwindigkeit so geregelt werden, dass zu Beginn eine langsame Geschwindigkeit gefahren wird, um die Menge an ausströmendem Dampf so zu kontrollieren, dass er vollständig in dem Ablöschkasten 26 niedergeschlagen werden kann, ohne durch den Notüberlauf zu entweichen.

Beim Druckgaren bleibt das Ventil 22 vorzugsweise geschlossen. Nur wenn ein Überdruck auftritt, kann es kurzzeitig geöffnet werden, um den Solldruck einzuhalten. Dann wird auch der Ablöschkasten 26 aktiviert.

Beim Druckgarprozess wird idealerweise nur mit der Temperatur der Heizelemente als Stellglied gesteuert, und der Kugelhahn bleibt bis zum Erreichen des gewünschten Garzustands des Lebensmittels geschlossen.

Um den Druck im Garraum nach Beendigung des Garprozesses abzubauen, wird das Ventil 22 vergleichsweise langsam geöffnet, beispielsweise über einen Zeitraum von 20 Sekunden. Dabei wird während jeder Phase das ausströmende Dampfvolumen so eingestellt, dass es vollständig in dem Ablöschkasten 26 niedergeschlagen werden kann, ohne das Dampf aus dem Notüberlauf austritt.

## Patentansprüche

1. Ablöschkasten (26) zum Kondensieren von Dampf für ein Gargerät, mit mindestens einem Dampfeinlass (48), mindestens einer Wasserdüse (50) und einem Wasserauslass (30), wobei eine Labyrinthstruktur (52, 54) mit mindestens einer Umlenkfläche zwischen dem Dampfeinlass (48) und dem Wasserauslass (30) vorgesehen ist, **dadurch gekennzeichnet, dass** der Wasserdüse (50) ein Verwirbelungsschutz (51) zugeordnet ist, wobei der Verwirbelungsschutz (51) dazu ausgebildet ist, einen Kontakt von Spritzwasser mit der Wasserdüse (50) zu verhindern.

2. Ablöschkasten (26) nach Anspruch 1, **dadurch gekennzeichnet, dass** zwei oder mehr Umlenkwände (52, 54) vorgesehen sind, die die Strömungsrichtung um jeweils mindestens 90° umlenken.

3. Ablöschkasten (26) nach Anspruch 1 oder Anspruch 2, **dadurch gekennzeichnet, dass** sie aus einem Körperteil (34) und einem Deckelteil (40) gebildet ist.

4. Ablöschkasten (26) nach Anspruch 3, **dadurch gekennzeichnet, dass** Deckelteil (40) dicht am Körperteil (36) montiert ist, insbesondere mit diesem verclipst ist.

5. Ablöschkasten (26) nach einem der vorhergehenden Ansprüche, **dadurch gekennzeichnet, dass** sie ein Kunststoffspritzgussteil ist, insbesondere aus PPS.

6. Ablöschkasten (26) nach einem der vorhergehenden Ansprüche, **dadurch gekennzeichnet, dass** sie zwei, drei oder vier Wasserdüsen (50) aufweist.

7. Ablöschkasten (26) nach einem der vorhergehenden Ansprüche, **dadurch gekennzeichnet, dass** er bezogen auf die Einbauposition in vertikaler Richtung langgestreckt ausgeführt ist, wobei sich die mindestens eine Wasserdüse (50) am oberen Ende befindet, darunter der Dampfeinlass (48) angeordnet ist, darunter die mindestens eine Umlenkfläche (52, 54) und darunter der Wasserauslass (30).

8. Ablöschkasten (26) nach Anspruch 7, **dadurch gekennzeichnet, dass** zwei Dampfeinlässe (48) übereinander angeordnet sind.

9. Ablöschkasten (26) nach einem der Ansprüche 1 bis 6, **dadurch gekennzeichnet, dass** eine Wasserdüse (50) in einer Hauptkondensationskammer (70) angeordnet ist, in der auch der Dampfeinlass (48) angeordnet ist, und dass die Umlenkfläche (54) die Hauptkondensationskammer (70) von einer Nachkondensationskammer (72) trennt, in der eine zweite Wasserdüse (50) angeordnet ist.

10. Ablöschkasten (26) nach Anspruch 9, **dadurch gekennzeichnet, dass** der Dampfeinlass (48) auf die Umlenkfläche orientiert ist.

11. Ablöschkasten (26) nach einem der vorhergehenden Ansprüche, **dadurch gekennzeichnet**, das eine Leitwand (60) vorgesehen ist, die das Kondensat zum Wasserauslass (30) führt und eine Überlaufkante (58) übergreift.

12. Ablöschkasten (26) nach einem der vorhergehenden Ansprüche, **dadurch gekennzeichnet, dass** ein Abwasseranschluss (32) vorgesehen ist, durch den Abwasser in den Ablöschkasten (26) eingeleitet werden kann, das durch den Wasserauslass (30) wieder abgeführt wird.

13. Ablöschkasten nach einem der vorhergehenden Ansprüche, **dadurch gekennzeichnet, dass** der Verwirbelungsschutz (51) durch einen Rohrstutzen gebildet ist, der in den Ablöschkasten (26) hineinragt.

14. Gargerät (10) mit einem Garraum (12, 14) und einem Ablöschkasten (26) nach einem der vorhergehenden Ansprüche, wobei ein Ventil (22) zwischen dem Garraum (12, 14) und dem Ablöschkasten (26) vorgesehen ist, mit dem der Dampfaustritt aus dem Garraum (12, 14) hin zum Ablöschkasten (26) gesteuert wird.

15. Gargerät nach Anspruch 14, **dadurch gekennzeichnet, dass** eine Druckausgleichsöffnung (57) zwischen dem Garraum (12, 14) und dem Wasserauslass (30) vorgesehen ist.

16. Gargerät nach Anspruch 15, **dadurch gekennzeichnet, dass** die Druckausgleichsöffnung (57) in einer Wand des Ablöschkastens (26) vorgesehen ist.

17. Gargerät nach Anspruch 15, **dadurch gekennzeichnet, dass** die Druckausgleichsöffnung (57) in einer Dampfleitung vom Garraum (12, 14) zum Ablöschkasten (26) vorgesehen ist.

18. Verfahren zum Steuern des Druckaufbaus bei einem Gargerät nach einem der beiden vorhergehendenden Ansprüche, mit den folgenden Schritten:
- beim Aufheizen wird das Ventil (22) in eine teilweise geöffnete Stellung gebracht,
- wenn eine sich im Garraum befindende Flüssigkeit eine Temperatur nahe der Siedetemperatur erreicht hat, wird Wasser mittels der Wasserdüse (50) in den Ablöschkasten (26) eingespritzt,
- sobald ein vordefiniertes Ereignis erreicht ist, wird das Ventil (22) geschlossen.

19. Verfahren nach Anspruch 18, **dadurch gekennzeichnet, dass** das vorbestimmte Ereignis ein vorbestimmter Druck ist.

## Claims

1. A quenching box (26) for the condensing of steam for a cooking device, comprising at least one steam inlet (48), at least one water nozzle (50), and a water outlet (30), wherein a labyrinth structure (52, 54) having at least one deflection surface is provided between the steam inlet (48) and the water outlet (30), **characterized in that** a swirl guard (51) is associated with the water nozzle (50), the swirl guard (51) being configured to prevent splash water from contacting the water nozzle (50).

2. The quenching box (26) according to claim 1, **characterized in that** two or more deflecting walls (52, 54) are provided, which deflect the flow direction by at least 90 degrees each.

3. The quenching box (26) according to claim 1 or claim 2, **characterized in that** it is formed of a body part (34) and a cover part (40).

4. The quenching box (26) according to claim 3, **characterized in that** the cover part (40) is mounted tightly to the body part (36), in particular is clipped to it.

5. The quenching box (26) according to any of the preceding claims, **characterized in that** it is an injection-molded plastic part, in particular made from PPS.

6. The quenching box (26) according to any of the preceding claims, **characterized in that** it includes two, three or four water nozzles (50).

7. The quenching box (26) according to any of the preceding claims, **characterized in that** it is of elongated design in the vertical direction in relation to the installation position, wherein the at least one water nozzle (50) is located at the upper end, the steam inlet (48) is arranged thereunder, the at least one deflection surface (52, 54) thereunder and the water outlet (30) thereunder.

8. The quenching box (26) according to claim 7, **characterized in that** two steam inlets (48) are arranged one above the other.

9. The quenching box (26) according to any of claims 1 to 6, **characterized in that** a water nozzle (50) is arranged in a main condensation chamber (70) in which the steam inlet (48) is also arranged, and **in that** the deflection surface (54) separates the main condensation chamber (70) from a post-condensation chamber (72) in which a second water nozzle (50) is arranged.

10. The quenching box (26) according to claim 9, **characterized in that** the steam inlet (48) is oriented onto the deflection surface.

11. The quenching box (26) according to any of the preceding claims, **characterized in that** a guide wall (60) is provided, which directs the condensate to the water outlet (30) and engages over an overflow edge (58).

12. The quenching box (26) according to any of the preceding claims, **characterized in that** a waste water connection (32) is provided, through which waste water can be introduced into the quenching box (26), which is discharged again through the water outlet (30).

13. The quenching box (26) according to any of the preceding claims, **characterized in that** the swirl guard (51) is formed by a pipe connection protruding into the quenching box (26).

14. A cooking device (10) comprising a cooking chamber (12, 14) and a quenching box (26) according to any of the preceding claims, wherein a valve (22) is provided between the cooking chamber (12, 14) and the quenching box (26), by means of which the exit of steam from the cooking chamber (12, 14) towards the quenching box (26) is controlled.

15. The cooking device according to claim 14, **characterized in that** a pressure compensation opening (57) is provided between the cooking chamber (12, 14) and the water outlet (30).

16. The cooking device according to claim 15, **characterized in that** the pressure compensation opening (57) is provided in a wall of the quenching box (26).

17. The cooking device according to claim 15, **characterized in that** the pressure compensation opening (57) is provided in a steam pipe from the cooking chamber (12, 14) to the quenching box (26).

18. A method of controlling the pressure build-up in a cooking device according to either of the preceding claims, comprising the steps of:
- placing the valve (22) in a partly open position during heating;
- injecting water into the quenching box (26) by means of the water nozzle (50) when a liquid located inside the cooking chamber has reached a temperature close to the boiling temperature;
- closing the valve (22) as soon as a predefined event is reached.

19. The method according to claim 18, **characterized in that** the predetermined event is a predetermined pressure.

## Revendications

1. Boîte de refroidissement (26) pour la condensation de vapeur pour un appareil de cuisson, comprenant au moins une entrée de vapeur (48), au moins une buse d'eau (50) et une sortie d'eau (30), une structure de labyrinthe (52, 54) présentant au moins une surface de déviation étant prévue entre l'entrée de vapeur (48) et la sortie d'eau (30), **caractérisée en ce qu'**une protection (51) contre les tourbillons est associée à la buse d'eau (50), la protection (51) contre les tourbillons étant réalisée de manière à empêcher un contact entre de l'eau projetée et la buse d'eau (50).

2. Boîte de refroidissement (26) selon la revendication 1, **caractérisée en ce qu'**il est prévu deux parois de déviation (52, 54) ou plus, lesquelles dévient chacune le sens d'écoulement d'au moins 90°.

3. Boîte de refroidissement (26) selon la revendication 1 ou la revendication 2, **caractérisée en ce qu'**elle est réalisée à partir d'une partie de corps (34) et d'une partie de couvercle (40).

4. Boîte de refroidissement (26) selon la revendication 3, **caractérisée en ce que** la partie de couvercle (40) est montée de manière étanche sur la partie de corps (36) et est en particulier clipsée sur celle-ci.

5. Boîte de refroidissement (26) selon l'une des revendications précédentes, **caractérisée en ce qu'**il s'agit d'une pièce moulée par injection en matière plastique, notamment en PPS.

6. Boîte de refroidissement (26) selon l'une des revendications précédentes, **caractérisée en ce qu'**elle présente deux, trois ou quatre buses d'eau (50).

7. Boîte de refroidissement (26) selon l'une des revendications précédentes, **caractérisée en ce que** par rapport à la position de montage, elle est réalisée de manière allongée dans le sens vertical, ladite au moins une buse d'eau (50) se trouvant à l'extrémité supérieure, l'entrée de vapeur (48) étant agencée là-dessous, ladite au moins une surface de déviation (52, 54) étant agencée là-dessous, et la sortie d'eau (30) étant agencée là-dessous.

8. Boîte de refroidissement (26) selon la revendication 7, **caractérisée en ce que** deux entrées de vapeur (48) sont agencées l'une au-dessus de l'autre.

9. Boîte de refroidissement (26) selon l'une des revendications 1 à 6, **caractérisée en ce qu'**une buse d'eau (50) est agencée dans une chambre de condensation principale (70) dans laquelle l'entrée de vapeur (48) est également agencée, et **en ce que** la surface de déviation (54) sépare la chambre de condensation principale (70) d'une chambre de condensation ultérieure (72) dans laquelle la deuxième buse d'eau (50) est agencée.

10. Boîte de refroidissement (26) selon la revendication 9, **caractérisée en ce que** l'entrée de vapeur (48) est orientée vers la surface de déviation.

11. Boîte de refroidissement (26) selon l'une des revendications précédentes, **caractérisée en ce qu'**il est prévu une paroi de guidage (60) qui guide le condensat vers la sortie d'eau (30) et chevauche un bord de débordement (58).

12. Boîte de refroidissement (26) selon l'une des revendications précédentes, **caractérisée en ce qu'**il est prévu un raccordement d'eaux usées (32) à travers lequel les eaux usées peuvent être introduites dans la boîte de refroidissement (26), lesquelles sont de nouveau évacuées à travers la sortie d'eau (30).

13. Boîte de refroidissement selon l'une des revendications précédentes, **caractérisée en ce que** la protection (51) contre les tourbillons est réalisée par une tubulure qui fait saillie dans la boîte de refroidissement (26).

14. Appareil de cuisson (10) présentant un espace de cuisson (12, 14) et une boîte de refroidissement (26) selon l'une des revendications précédentes, une soupape (22) au moyen de laquelle la sortie de la vapeur hors de l'espace de cuisson (12, 14) vers la boîte de refroidissement (26) est commandée étant prévue entre l'espace de cuisson (12, 14) et la boîte de refroidissement (26).

15. Appareil de cuisson selon la revendication 14, **caractérisé en ce qu'**il est prévu une ouverture de compensation de pression (57) entre l'espace de cuisson (12, 14) et la sortie d'eau (30).

16. Appareil de cuisson selon la revendication 15, **caractérisé en ce que** l'ouverture de compensation de pression (57) est prévue dans une paroi de la boîte de refroidissement (26).

17. Appareil de cuisson selon la revendication 15, **caractérisé en ce que** l'ouverture de compensation de pression (57) est prévue dans une conduite de vapeur depuis l'espace de cuisson (12, 14) vers la boîte de refroidissement (26).

18. Procédé de commande de l'établissement de la pression dans un appareil de cuisson selon l'une des deux revendications précédentes, comprenant les étapes suivantes :
- la soupape (22) est amenée dans une position partiellement ouverte lors du chauffage,
- lorsqu'un liquide dans l'espace de cuisson a atteint une température proche de la température d'ébullition, l'eau est injectée dans la boîte de refroidissement (26) au moyen de la buse d'eau (50),
- la soupape (22) est fermée dès qu'un résultat prédéterminé est atteint.

19. Procédé selon la revendication 18, **caractérisé en ce que** le résultat prédéterminé est une pression prédéterminée.
